# EUROPEAN PATENT SPECIFICATION

(11) **EP 2 781 123 B1**
(45) Date of publication and mention of the grant of the patent: **09.09.2020**
(21) Application number: 12787428.7
(22) Date of filing: 12.11.2012
(51) Int. Cl.: H04W 36/22, H04W 36/00, H04W 28/08, H04W 24/02

(54) **PERFORMING MOBILITY LOAD BALANCING AND MOBILITY ROBUSTNESS OPTIMIZATION BETWEEN ACCESS NODES FOR ONLY A SUBSET OF USER EQUIPMENT**
DURCHFÜHRUNG VON MOBILITÄTSLASTAUSGLEICH UND MOBILITÄTSROBUSTHEITSOPTIMIERUNG ZWISCEN ZUGANGSKNOTEN FÜR NUR EINE UNTERGRUPPE VON BENUTZERGERÄTEN
RÉALISATION D'UN ÉQUILIBRAGE DE CHARGE DE MOBILITÉ ET D'UNE OPTIMISATION DE ROBUSTESSE DE MOBILITÉ ENTRE DES N UDS D'ACCÈS POUR SEULEMENT UN SOUS-ENSEMBLE D'ÉQUIPEMENTS D'UTILISATEURS

(30) Priority: 14.11.2011 US 201161559275 P
(43) Date of publication of application: 24.09.2014
(73) Proprietor: Nokia Solutions and Networks Oy, 02610 Espoo (FI)
(72) Inventor: WALDHAUSER, Richard, 81249 München (DE); LASELVA, Daniela, DK-9270 Klarup (DK); LOBINGER, Andreas, 85567 Grafing (DE); PEDERSEN, Klaus Ingemann, DK-9000 Aalborg (DK); SARTORI, Cinzia, 80634 München (DE); VIERING, Ingo, 81541 München (DE); WEGMANN, Bernhard, 83607 Holzkirchen (DE)
(74) Representative: Nokia EPO representatives
(86) International application number: PCT/EP2012/072372
(87) International publication number: WO 2013/072271

(56) References cited:
- EP-A1- 2 306 761
- US-A1- 2009 163 223
- US-A1- 2011 128 862
- US-A1- 2011 176 424
- MOTOROLA: "Add MOBILITY SETTINGS CHANGE Procedure to X2-CP Procedure section", 3GPP DRAFT; R3-101694, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Montreal, Canada; 20100510, 17 May 2010 (2010-05-17), XP050425434, [retrieved on 2010-05-17]
- NOKIA SIEMENS NETWORKS: "QoS awareness for MRO to allow higher MLB gain", 3GPP DRAFT; R3-113011 NSN_MRO_MLB_QOS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. San Francisco, USA; 20111114 - 20111118, 4 November 2011 (2011-11-04), XP050566153, [retrieved on 2011-11-04]
- NOKIA SIEMENS NETWORKS: "Additional information on the Handover Trigger value needed for HO negotiations", 3GPP DRAFT; R3-093055 SON_MLB_HO_NEGOTIATIONS_DISC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050392519, [retrieved on 2009-11-19]

## Description

### TECHNICAL FIELD:

The exemplary and non-limiting embodiments of this invention relate generally to wireless communication systems, methods, devices and computer programs and, more specifically, relate to wireless broadband systems such as one known as Long Term Evolution (LTE), to self-optimizing networks (SON) and to intra-RAT and inter-RAT (radio access technology) handovers.

### BACKGROUND:

This section is intended to provide a background or context to the invention that is recited in the claims. The description herein may include concepts that could be pursued, but are not necessarily ones that have been previously conceived, implemented or described. Therefore, unless otherwise indicated herein, what is described in this section is not prior art to the description and claims in this application and is not admitted to be prior art by inclusion in this section.

The following abbreviations that may be found in the specification and/or the drawing figures are defined as follows:
- 3GPP: third generation partnership project
- BS: base station
- C-RNTI: cell radio network temporary identifier
- DL: downlink (eNB towards UE)
- eNB: E-UTRAN Node B (evolved Node B)
- EPC: evolved packet core
- E-UTRAN: evolved UTRAN (LTE)
- GNSS: global navigation satellite system
- HO: handover
- IE: information element
- IMTA: international mobile telecommunications association
- ITU-R: international telecommunication union-radiocommunication sector
- KPI: key performance indicator
- LTE: long term evolution of UTRAN (E-UTRAN)
- LTE-A: LTE advanced
- MAC: medium access control (layer 2, L2)
- MCR: mobility change request
- MCF: mobility change failure
- MLB: mobility load balancing
- MM/MME: mobility management/mobility management entity
- MRO: mobility robustness optimization
- NodeB: base station
- OFDMA: orthogonal frequency division multiple access
- O&M: operations and maintenance
- PDCP: packet data convergence protocol
- PHY: physical (layer 1, L1)
- QoS: quality of service
- QCI: quality of service class identifier
- RAT: radio access technology
- Rel: release
- RLC: radio link control
- RLF: radio link failure
- RRC: radio resource control
- RRM: radio resource management
- SGW: serving gateway
- SC-FDMA: single carrier, frequency division multiple access
- SON: self optimizing network
- UE: user equipment, such as a mobile station, mobile node or mobile terminal
- UL: uplink (UE towards eNB)
- UPE: user plane entity
- UTRAN: universal terrestrial radio access network

One modern communication system is known as evolved UTRAN (E-UTRAN, also referred to as UTRAN-LTE or as E-UTRA). In this system the DL access technique is OFDMA, and the UL access technique is SC-FDMA.

One specification of interest is 3GPP TS 36.300 V10.5.0 (2011-09) *Technical Specification* 3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 10) referred to for simplicity hereafter as 3GPP TS 36.300.

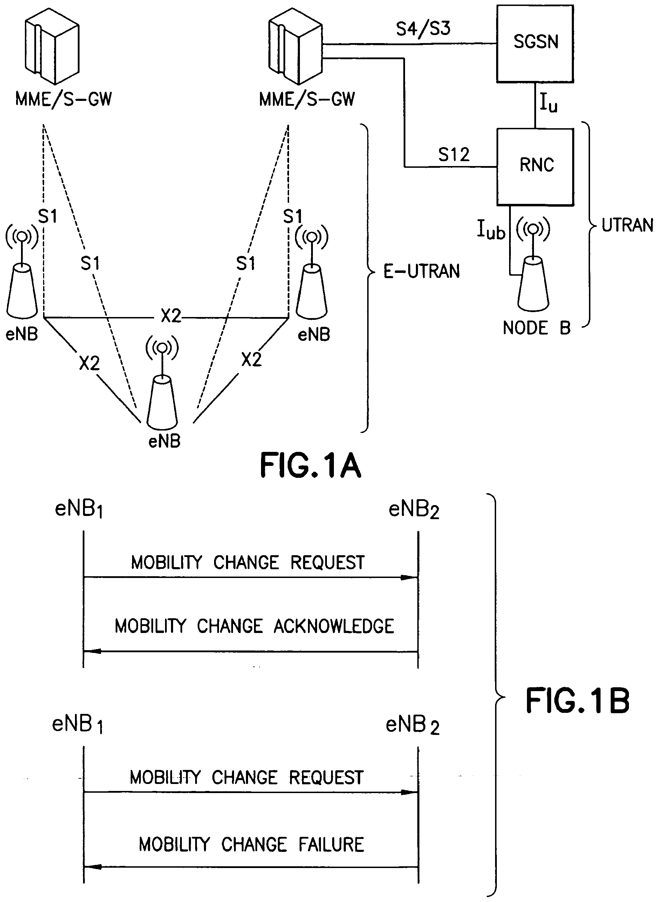

Figure 1A is based on Figure 4.1 of 3GPP TS 36.300 and shows the overall architecture of the E-UTRAN system (Rel-8). The E-UTRAN system includes eNBs, providing the E-UTRAN user plane (PDCP/RLC/MAC/PHY) and control plane (RRC) protocol terminations towards the UEs. The eNBs are interconnected with each other by means of an X2 interface. The eNBs are also connected by means of an S1 interface to an EPC, more specifically to a MME by means of a S1 MME interface and to a S-GW by means of a S1 interface (MME/S-GW 4). The S1 interface supports a many-to-many relationship between MMEs / S-GWs / UPEs and eNBs.

The eNB hosts the following functions:
functions for RRM: RRC, Radio Admission Control, Connection Mobility Control, Dynamic allocation of resources to UEs in both UL and DL (scheduling);
IP header compression and encryption of the user data stream;
selection of a MME at UE attachment;
routing of User Plane data towards the EPC (MME/S-GW);
scheduling and transmission of paging messages (originated from the MME);
scheduling and transmission of broadcast information (originated from the MME or O&M); and
a measurement and measurement reporting configuration for mobility and scheduling.

Figure 1A also shows the connectivity between the E-UTRAN MME and a serving GPRS support node (SGSN, S3/S4 interfaces) and a radio network controller (RNC, S12 interface, RNC connected with the SGSN via lu interface) of UTRAN.

Also of interest herein are the further releases of 3GPP LTE (e.g., LTE Rel-10) targeted towards future IMT-A systems, referred to herein for convenience simply as LTE-Advanced (LTE-A). Reference in this regard may be made to 3GPP TR 36.913 V10.0.0 (2011-03) *Technical Report* 3rd Generation Partnership Project; Technical Specification Group Radio Access Network; Requirements for further advancements for Evolved Universal Terrestrial Radio Access (E-UTRA) (LTE-Advanced)(Release 10). Reference can also be made to 3GPP TR 36.912 V10.0.0 (2011-03) *Technical Report* 3rd Generation Partnership Project; Technical Specification Group Radio Access Network; Feasibility study for Further Advancements for E-UTRA (LTE-Advanced) (Release 10).

A goal of LTE-A is to provide significantly enhanced services by means of higher data rates and lower latency with reduced cost. LTE-A is directed toward extending and optimizing the 3GPP LTE Rel-8 radio access technologies to provide higher data rates at lower cost. LTE-A will be a more optimized radio system fulfilling the ITU-R requirements for IMT-Advanced while keeping the backward compatibility with LTE Rel-8.

Significant effort has been expended in an attempt to reduce and simplify the network operator's tasks for planning, optimization and operation of the wireless broad band system. An aspect of this is self-optimization. For self-optimization typically certain indicators are generated and observed. These indicators are also known as 'key performance indicators' (KPIs). KPIs reflect the quality, performance or the status of certain aspects of the system. If the automatic observation of these KPIs reveals a potential for optimization then autonomous self-optimizing functionalities can be triggered according to the preferences of the network operator to adjust the system behaviour. Two of these optimization functions are known as mobility robustness optimization (MRO) and mobility load balancing (MLB).

MRO is responsible for optimizing the handover behaviour between neighbour cells with respect to minimizing the number of radio link failures (RLF) that are caused by misaligned handover parameters. The presence of such misaligned handover parameters can result in too late handovers, handovers that are done too early, or handovers that are done to the wrong cell. Also unnecessary handovers from LTE to UMTS/GERAN can be detected, although these types of handovers will generally not cause RLFs. The correction of these problems may require adjusting the trigger for the handover decisions between two cells, i.e., an event when a radio node decides that a specific user equipment (UE) being currently served by this radio node has to be handed over to a radio cell which is under control of a neighbour radio node. Depending on the nature of the detected problem it may help to trigger this handover earlier or later. If a self-optimizing functionality decides that the modification of the handover trigger needs to be coordinated with the neighbour radio node then this can be done by means of a Mobility Settings Change procedure.

The MLB functionality can be used by a radio node recognizing a high load in one of its radio cells. For this purpose MLB allows for requesting information about the load situation of relevant cells controlled by neighbour radio nodes. If the received load information indicates that a cell of the neighbour radio node has sufficient resources to serve UEs that are currently served by the overloaded cell then the overloaded cell may select suitable candidate UEs that can also be served by the neighbour (e.g., less heavily loaded) cell and handover these UEs to this cell of the neighbour radio node. It may be necessary to modify the trigger for handover decision for both the overload serving cell and the low or unloaded neighbour cell in order to avoid the situation where the target cell hands the UE back to the overloaded cell. This negotiation can be performed using the Mobility Settings Change procedure.

In R3-091696, RAN#65, August 2009, Title: Communication between MRO and MLB procedure, Shenzhen, China, Source: CMCC it was proposed that in order to avoid a possible procedure conflict between MLB optimization and MRO the MLB procedure should inform the MRO procedure that it is active and adjusting their common output parameters, such as HO parameters, for load balancing reasons. As a result the MRO procedure, during the time the MLB procedure is active, would negotiate a uniform setting of its common parameters with MLB and the MRO procedure would continue the optimization of the remainder of the MRO parameters.

In R3-091565, RAN3#65, August 2009, Title: Conflict Avoidance between MLB and MRO, Source: CATT, CATR, ZTE, it was proposed that MLB optimization should avoid decreasing MRO performance to avoid Ping-Pong problems, and that the MRO inform the MLB of a HO parameters range which can cause Ping-Pong problems or which can not cause Ping-Pong. Further, to diagnose Ping-Pong problems, to diagnose unsuitable HO parameters to cause Ping-Pong, or conflict avoidance between MLB and MRO, the neighbour cell should transfer its HO parameters to the serving cell through the X2 or S1 interface. Also, before making the decisions of a HO parameters adjustment, the HO parameters should be transferred through X2 or S1.

R3-112407, RAN3#73bis, October 2011, Title: Requirements for MRO and MLB coordination, Source: CMCC, discusses some requirements for further coordination between MRO and MLB. The following was proposed: avoid MRO and MLB conflict resulting from control parameters changing; guarantee an optimal network performance in case these two functions procedures operate simultaneously; and when MRO performs the corrective actions, corresponding information, e.g. policy, of the MLB should be notified, or vice versa.

In R3-112638, RAN3#73bis, October, 2011, Title: Considerations of MRO and MLB Integration, Source: China Unicom, it was proposed that since the priority of MRO and MLB functions in different network deployments is not the same, the integration/coordination approach between MRO and MLB should be classified differently based on scenarios type. The integration of MRO and MLB should contain two phases: Phase 1 should accomplish the coordination solution based on priorities in different type scenarios, retaining the integrity of existing MRO and MLB use cases; while Phase 2 would aim to merge MRO and MLB into one new use case to reduce mobility optimization management, which has separate options for operator service/policies based scenarios and radio coverage based scenarios.

R3-112639, RAN3#73bis, October 2011, Title: The Use of Coverage Indicator IE in MRO and MLB Integration, Source: China Unicom proposed that a coverage indication between cells should be added in order to accurately indicate the possible capability and interrelationship of neighbour cells. Furthermore a Coverage Indicator IE defined in UMTS (possibly extended) should be introduced in LTE and inter-layer/RAT (IRAT) systems so that they can indicate coverage relationships of all the neighbour cells in IRAT/inter-layer networks.

R3-112772, RAN3#74, November 2011, Title: MRO MLB interaction, Source: Huawei, discussed the coordination of MRO and MLB and observed the following: the coordination between MRO and MLB is performed in the eNB and is implementation specific; and the targets and weights for MLB and MRO are set by OAM and should allow for the eNB to make the correct balance between MRO and MLB functionality. If MLB is used and if the RLF report is received from a UE during RRC connection setup, it will be difficult to know what mobility parameters were actually used, and that simply switching off MRO when different mobility parameter configurations exist in parallel would impose a large limitation to the MRO algorithm.

In R3-112828, RAN3#74, November 2011, Title: Consideration on MRO&MLB Coordination in Inter-layer/RAT Networks, Source: China Unicom, it was stated there is little need to use a coordination mechanism among single layer intra-LTE scenarios since a potential conflict could be avoided via cancellation or restriction on MLB by the allowed range. It was proposed that coordination between MRO and MLB should be studied in certain interlayer/RAT scenarios whose deployment function is based on operator policies/service use. It was also proposed that a Coverage Indicator IE, which can indicate specific scenarios where coordination is needed by means of cell coverage information, should be introduced in both UTRAN and E-UTRAN and be configurable by the OAM system.

R3-112876, RAN3#74, November 2011, Title: Cause Analysis for Short Stay and Ping-pong Issues, Source: New Postcom, proposed that the discussions of MRO-MLB coordination should take into account short stay and ping pong issues.

### SUMMARY

In a first aspect thereof the examples of the embodiments of this invention provide a method that comprises, at a first network access node, partitioning a plurality of user equipment that are served by a cell of the network access node into at least two groups based on at least one partitioning criterion; sending a message to a second network access node having a neighboring cell, the message comprising group indicator information for identifying those user equipment that are comprised in the at least one first group, and performing mobility load balancing (MLB) procedures between the first and second network access nodes considering only those user equipment identified by the group indicator information, and to simultaneously perform mobility robustness optimization procedures between the first and second network access nodes with respect to group indicator information, considering only those user equipments that are comprised in the at least one second group.

The foregoing method can be performed as a result of execution by a data processor of software program instructions contained within a computer-readable medium, and thus the invention also encompasses the software program instructions and the computer-readable medium that contains the software program instructions.

In another aspect thereof the examples of the embodiments of this invention provide an apparatus that comprises at least one data processor and at least one memory including computer program code. In the apparatus the at least one memory and computer program code are configured, with the at least one data processor, to cause the apparatus at least to partition a plurality of user equipment that are served by a cell of a network access node into at least two groups based on at least one partitioning criterion, to send a message to a second network access node having a neighboring cell, the message comprising group indicator information for identifying those user equipment that are comprised in the at least one first group, and to perform mobility load balancing (MLB) procedures between the first and second network access nodes considering only those user equipment identified by the group indicator information, and to simultaneously perform mobility robustness optimization procedures between the first and second network access nodes (12, 12') with respect to group indicator information, considering only those user equipments that are comprised in the at least one second group.

### BRIEF DESCRIPTION OF THE DRAWINGS

Figure 1A is based on Figure 4.1 of 3GPP TS 36.300, and shows the overall architecture of the E-UTRAN system.
Figure 1B reproduces Figures 8.3.8.2-1, Mobility Settings Change, successful operation and 8.3.8.3-1, Mobility Settings Change, unsuccessful operation of 3GPP TS 36.423.
Figure 1C reproduces the Mobility Change Request message format found in Section 9.1.2.15 of 3GPP TS 36.423.
Figure 1D reproduces Table 6.1.7 of 3GPP TS 23.203 and shows Standardized QCI characteristics.

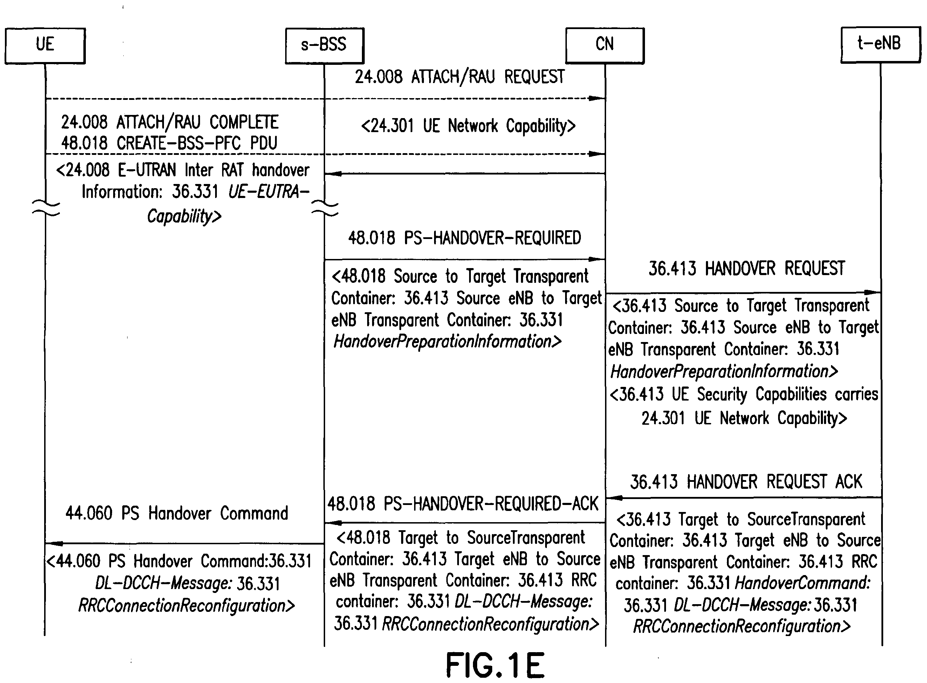

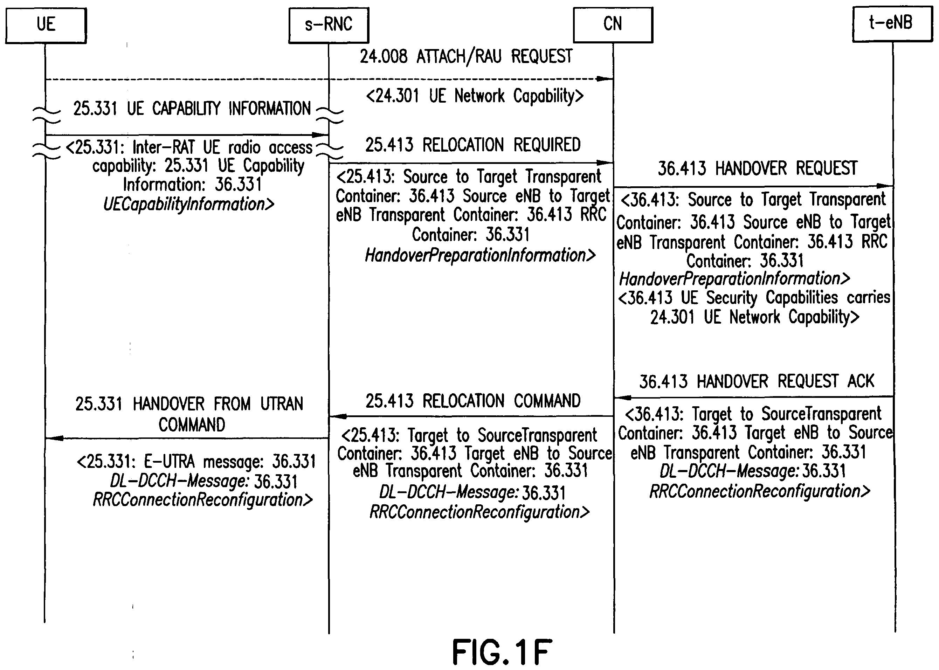

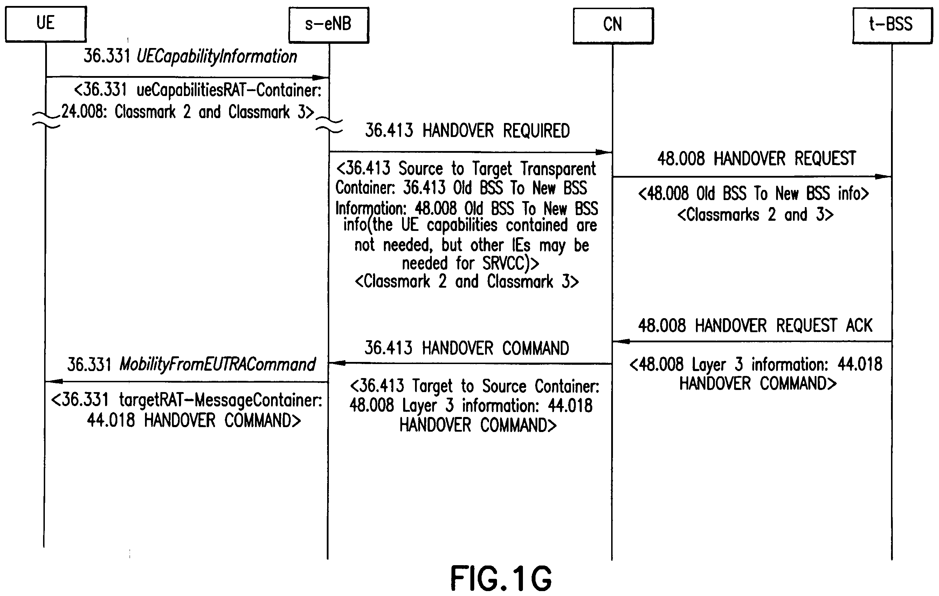

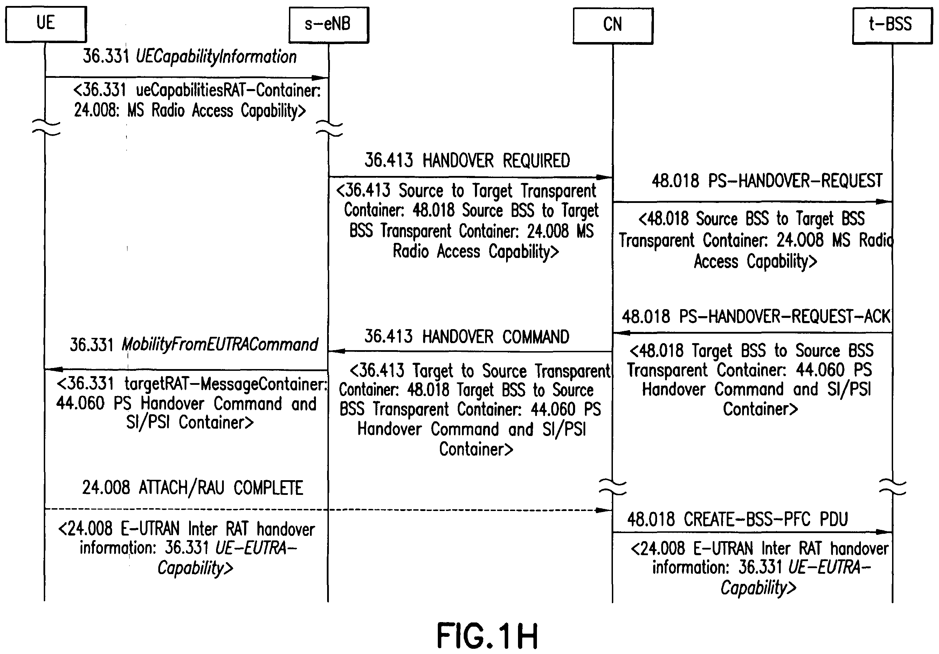

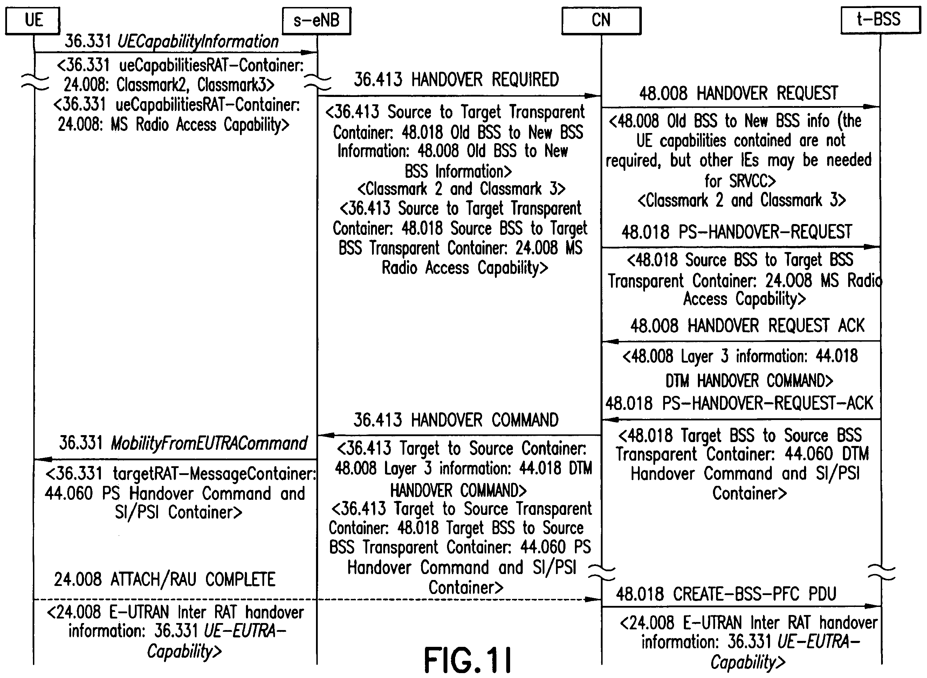

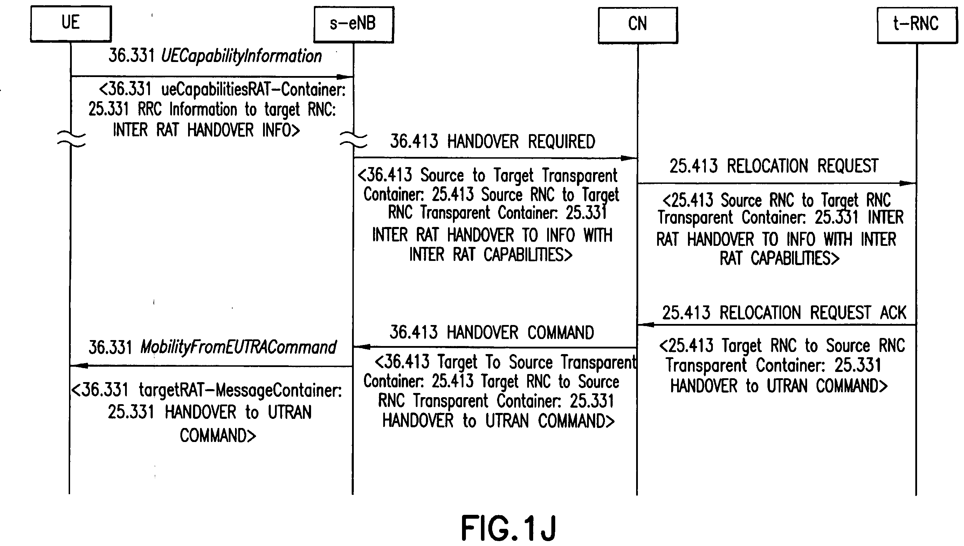

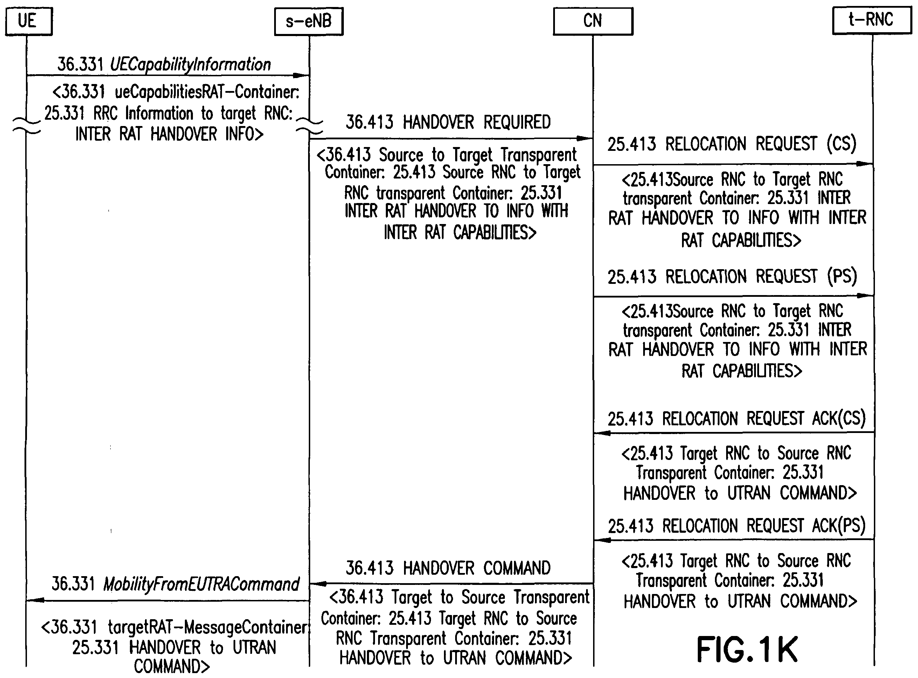

Figures 1E-1K reproduce Figures 19.2.2.5.6-1 to 19.2.2.5.6-7 of 3GPP TS 36.300. where Figure 1E shows Handover of PS (packet switched) domain service from GERAN A/Gb mode to E-UTRAN , normal flow, where Figure 1F shows Handover of PS domain service from UTRAN to E-UTRAN , normal flow, where Figure 1G shows Handover of CS (circuit switched) domain service from E-UTRAN to GERAN A/Gb mode, normal flow, where Figure 1H shows Handover of PS domain service from E-UTRAN to GERAN A/Gb mode, normal flow, where Figure 1I shows Handover of CS and PS domain services from E-UTRAN to GERAN A/Gb mode, normal flow, where Figure 1J shows Handover of PS or CS domain service from E-UTRAN to UTRAN, normal flow, and where Figure 1K shows Handover of PS and CS domain service from E-UTRAN to UTRAN, normal flow.
Figure 2 shows a simplified block diagram of various electronic devices that are suitable for use in practicing the exemplary embodiments of this invention.
Figure 3 is a logic flow diagram that illustrates the operation of a method, and a result of execution of computer program instructions embodied on a computer readable medium, in accordance with the exemplary embodiments of this invention.

### DETAILED DESCRIPTION

As should be apparent, there have been a number of proposals and observations related to the MRO and MLB problem in LTE.

Both the MRO and MLB may modify the trigger for the handover decision to solve the MRO or MLB problem, respectively. If the radio nodes use the Mobility Settings Change procedure to coordinate a shift for triggering the hand over decisions this effectively leads to a movement of the cell border between the neighbour cells, e.g., an overloaded cell effectively reduces its serving area with the goal being to share the scarce air interface resources amongst fewer users while the neighbour cell increases its serving area and provides resources to serve UEs that previously were served by the overloaded neighbour cell.

One disadvantage of this effective border shifting is that from a purely radio resource point of view the UEs that were taken from the overloaded neighbour cell require comparably more radio resources when they are served by the cell that has admitted them into its coverage area. The idea here is that this cell is not as loaded and thus the eNB serving this cell can afford to expend more of these resources than would normally be required, assuming that the UEs would be served by the overloaded cell in a less-loaded situation. It is only because of the overload situation that the eNB with the best air link conditions cannot afford to expend these resources. The less-loaded neighbour node however can expend even more resources.

While the MRO functionality shifts cell borders in order to enforce optimal handover trigger points to reduce the occurrence of RLFs, the MLB functionality that shifts cell borders leads to intentionally sub-optimal handover trigger points. The MLB and MRO functionalities thus can contradict one another with respect to their decisions of how to solve the problem. As a result some type of coordination is required to resolve this contradictory situation.

Since the problems are perceived differently for different services the embodiments of this invention provide a solution that allows for a partially decoupled simultaneous operation of MLB and MRO functionalities, depending on QoS requirements.

Following the state-of-the-art in terms of interworking as well as conflict resolution between MRO and MLB, it can be noted that one simple solution to the problem is to allow only the MLB or the MRO to be active at any one time, or at least to allow only one of these functions to modify the cell borders. However, and especially for the MRO functionality, any corrective activities on handover parameters will be based on statistically analyzed KPIs. The MRO algorithms may prefer to apply small step sizes when changing any parameters in order to have the opportunity to observe whether the modification(s) lead to the desired system behaviour. This means it may take some time until an MRO optimization can be considered as completed. Simply switching off the MRO functionality when the MLB functionality become active can impose a severe constraint on system operation.

Also related to the more generic conflict resolution problem, another possible solution may be that one functionality supervises the other functionality in terms of setting constraints for the other functionality. In this manner at least some limited freedom is retained for the other functionality where it can operate normally unless it collides with the imposed limits.

Another potential approach is to combine the MLB functionality and MRO functionality to enable changes that can be considered as the optimum for both MLB and MRO; or to let these functions negotiate with each other and determine a jointly agreed upon optimized decision. Since both optimization use cases pursue different criteria, this approach results only in a compromised, sub-optimum corrective activity. Or if, for instance, one of the two functionalities is more important than the other one might loose all benefits of the other functionality.

Figure 1B herein reproduces Figures 8.3.8.2-1, Mobility Settings Change, successful operation and 8.3.8.3-1, Mobility Settings Change, unsuccessful operation of 3GPP TS 36.423 V10.3.0 (2011-09) *Technical Specification* 3rd Generation Partnership Project; Technical Specification Group Radio Access Network; Evolved Universal Terrestrial Radio Access Network (E-UTRAN); X2 application protocol (X2AP) (Release 10). 3GPP TS 36.423. 3GPP TS 36.423 defines the X2 application protocol (X2AP) which is responsible for application layer communication directly between two logical nodes, the logical nodes being eNBs of E-UTRAN. The mobility change procedure is used to negotiate new values for the trigger of the handover decision.

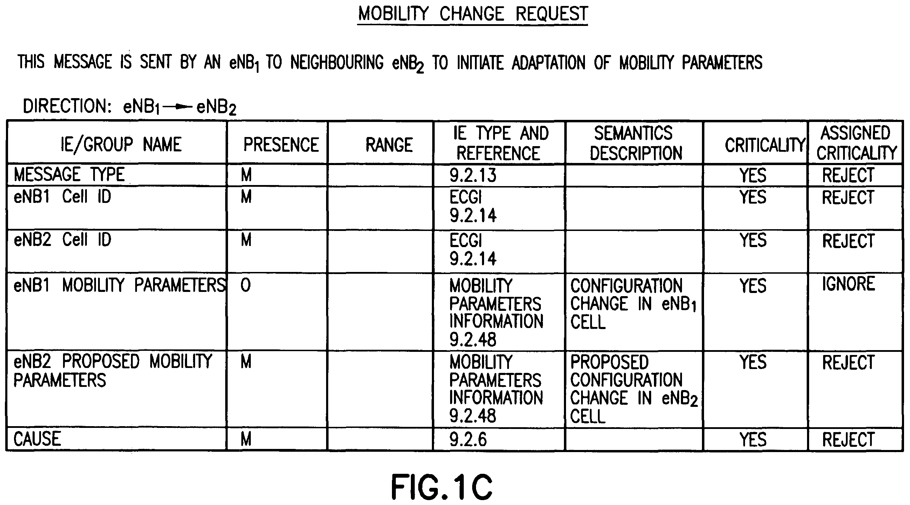

Currently the Mobility Change Request (MCR) message (also see Figure 1C) transfers the following elements:
- id-ENB1-Cell-ID
- id-ENB2-Cell-ID
- id-ENB1-Mobility-Parameters
- id-ENB2-Proposed-Mobility-Parameters
- id-Cause

The Mobility- and Proposed Mobility Parameters above transfer the value of the HO trigger change. The Cause indicates to the receiving node whether the request is stemming from MLB or MRO functionality (load-balancing or handover-optimization)
The Mobility Change Failure (MCF) message transfers the following elements:
- id-ENB1-Cell-ID
- id-ENB2-Cell-ID
- id-Cause
- id-ENB2-Mobility-Parameters-Modification-Range
- id-CriticalityDiagnostics

The Mobility Parameters Modification Range provides upper and lower limits for the HO trigger change. With the failure message the neighbour indicates that it does not want or cannot follow the proposed parameter change of the request message (the cause value is a value-out-of-allowed-range).

However, by providing the Mobility Parameters Modification Range the eNB can indicate upper and lower values of a value range. Between those values the neighbour node could acknowledge a mobility change request. An eNB may provide this element in order to avoid a lengthy trial and error based negotiation procedure between the eNBs.

The foregoing definitions are only valid for Intra-LTE MLB and Intra-LTE MRO. For corresponding Inter-RAT functionalities currently no Mobility Change procedure is defined.

One significant problem of the currently proposed approaches is a lack of awareness of services and their corresponding QoS requirements. While some real-time services such as voice calls could tolerate some RLFs, the MLB could be seen as being more relaxed than for more sensitive non-real time (NRT) services. The deficiency of the QoS-awareness hinders an optimally balanced interworking of the MLB and the MRO.

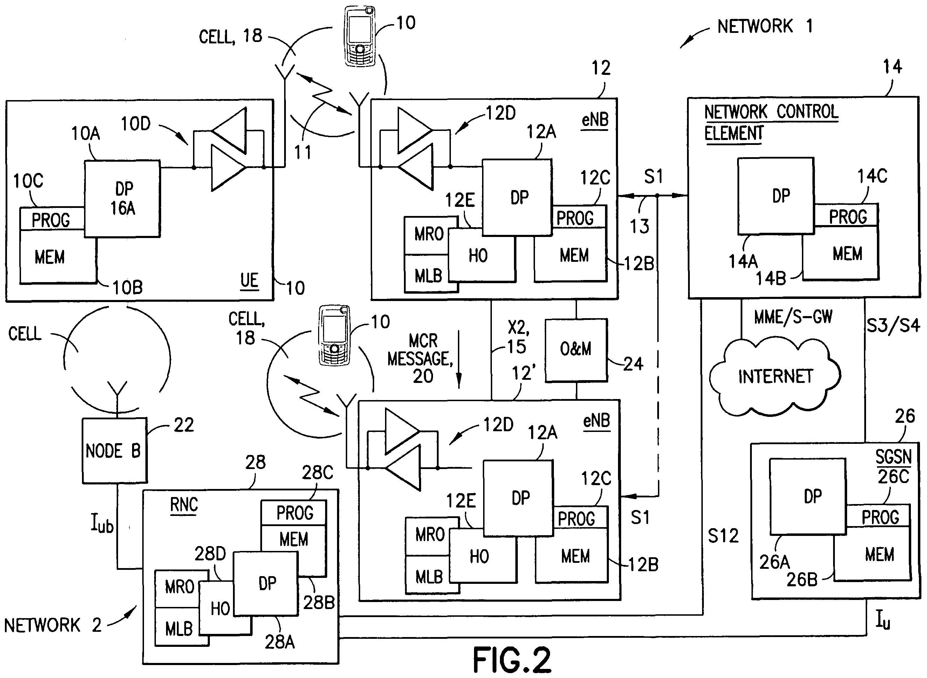

Before describing in further detail the exemplary embodiments of this invention, reference is made to Figure 2 for illustrating a simplified block diagram of various electronic devices and apparatus that are suitable for use in practicing the exemplary embodiments of this invention. In Figure 2 two wireless networks (network 1 and network 2) are shown. The wireless network 1 can be an LTE network that is adapted for communication over a wireless link 11 with an apparatus, such as a mobile communication device which may be referred to as a UE 10, via a network access node, such as a Node B (base station), and more specifically an eNB 12. The network 1 may include a network control element (NCE) 14 that may include the MME/SGW functionality shown in Figure 1A, and which provides connectivity with a further network, such as a telephone network and/or a data communications network (e.g., the internet).

The UE 10 includes a controller, such as at least one computer or a data processor (DP) 10A, at least one non-transitory computer-readable memory medium embodied as a memory (MEM) 10B that stores a program of computer instructions (PROG) 10C, and at least one suitable radio frequency (RF) transmitter and receiver pair (transceiver) 10D for bidirectional wireless communications with the eNB 12 via one or more antennas.

The eNB 12 also includes a controller, such as at least one computer or a data processor (DP) 12A, at least one computer-readable memory medium embodied as a memory (MEM) 12B that stores a program of computer instructions (PROG) 12C, and at least one suitable RF transceiver 12D for communication with the UEs 10 via one or more antennas (typically several when multiple input / multiple output (MIMO) operation is in use). The eNB 12 is coupled via a data / control path 13 to the NCE 14. The path 13 may be implemented as the S1 interface shown in Figure 1A. The eNB 12 can also be coupled to another eNB 12' via data / control path 15, which can be implemented as the X2 interface shown in Figure 1A. Each eNB 12, 12' is assumed to establish at least one associated cell 18, 18' for communication with UEs 10 located in the cell. For the purposes of describing this invention the cells 18, 18' shown in Figure 2 may be assumed to be neighbor cells.

Also for the purposes of describing the exemplary embodiments of this invention each eNB 12, 12' is assumed to include a HO functionality 12E that operates in accordance with the exemplary embodiments of this invention, and that can be assumed to include at least MLB functionality and MRO functionality. The HO functionality 12E is enhanced in accordance with the exemplary embodiments of this invention as described in detail below.

It should be noted however that some or all of the SON functionality can be resident at an O&M functional unit 24. More specifically, that part of the SON function which is responsible for the detection, i.e., performing the root cause analysis which generates the MRO relevant KPIs, can be located in the controlling radio nodes (e.g., the eNBs 12, 12'). However, the correcting SON functions can also be located in a centralized node, e.g., in the O&M node 24.

The NCE 14 can be assumed to include at least one controller, such as at least one computer or a data processor (DP) 14A and at least one non-transitory computer-readable memory medium embodied as a memory (MEM) 14B that stores a program of computer instructions (PROG) 14C.

Of particular interest to Inter-RAT embodiments of this invention Figure 2 also shows a SGSN 26, RNC 28, a NodeB 22 and the various interfaces of interest (S3/S4, S12, lu, lub (see also Figure 1A)). At least some of these functionalities can be assumed to form a part of the second network 2, such as the UTRAN network shown in Figure 1A. The SGSN 26 can be assumed to include a controller, such as at least one data processor (DP) 26A and at least one computer-readable memory medium embodied as a memory (MEM) 26B that stores a program of computer instructions (PROG) 26C. The UTRAN RNC 28 can be assumed to include a controller, such as at least one data processor (DP) 28A and at least one computer-readable memory medium embodied as a memory (MEM) 28B that stores a program of computer instructions (PROG) 26C. The RNC 28 is also assumed to include a HO functionality 28D that operates in accordance with the exemplary embodiments of this invention, and that can be assumed to include at least MLB functionality and MRO functionality. The HO functionality 28D is also enhanced in accordance with the exemplary embodiments of this invention as described in detail below.

At least the programs 12C and 28C are assumed to include program instructions that, when executed by the associated DP 12A, 28A enable the device to operate in accordance with the exemplary embodiments of this invention, as will be discussed below in greater detail. That is, the exemplary embodiments of this invention may be implemented at least in part by computer software executable by the DP 12A of the eNB 12, by the DP 28A of the RNC 28, or by hardware, or by a combination of software and hardware (and firmware).

The various data processors, memories, programs, transceivers and interfaces depicted in Figure 2 can all be considered to represent means for performing operations and functions that implement the several non-limiting aspects and embodiments of this invention.

In general, the various embodiments of the UE 10 can include, but are not limited to, cellular mobile devices, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, as well as portable units or terminals that incorporate combinations of such functions.

The computer-readable MEMs 10B, 12B, 14B, 26B and 28B may be of any type suitable to the local technical environment and may be implemented using any suitable data storage technology, such as semiconductor based memory devices, random access memory, read only memory, programmable read only memory, flash memory, magnetic memory devices and systems, optical memory devices and systems, fixed memory and removable memory. The DPs 10A, 12A, 14A, 26A and 28A may be of any type suitable to the local technical environment, and may include one or more of general purpose computers, special purpose computers, microprocessors, digital signal processors (DSPs) and processors based on multi-core processor architectures, as non-limiting examples.

The exemplary embodiments of this invention provide a method and an apparatus that allows for the partial decoupling of the MLB functionality and the MRO functionality that could be resident at the HO functionalities 12E of the eNBs 12 (and HO functionality 28D of the RNC 28), or in, for example, the O&M domain (O&M 24). The MRO and MLB can be basically considered as software entities that could be resident at some central facility somewhere in the O&M domain, or they could be resident in the eNBs 12. Note that for 3G (UMTS) the MRO and MLB could be located in the RNC 28 as shown in Figure 2. In general the MRO and MLB are preferably not resident at the Mobility Management (MM) functionalities, but instead operate for steering the parameters used by the MM.

It is pointed out that the exact location or locations where the MRO and MLB functions are located is not particularly germane to the description and understanding of the exemplary embodiments of this invention, and that they can be physically and/or logically located at any suitable place in the system.

Partial decoupling is achieved by transferring novel group indicator information to the neighbour radio node (eNB 12'). The group indicator information allows for unambiguous identification of a set of UEs 10, e.g., UEs 10 that have established bearers according to a QoS criterion, or that have a certain user capability or capabilities, as specified by the group indicator information. The negotiated cell border between the eNBs 12, 12' is applied only for this set of UEs 10 by using different HO trigger criteria. Other UEs 10, those not identified by the specification of the group indicator, are not addressed by the negotiation of a new trigger for the HO decision.

It is thus pointed out that while the embodiments of this invention are described primarily in the context of the use of QoS-based criteria, these may not be the only criteria for group building (partitioning the UEs 10 into at least two groups). As was noted above, user equipment capabilities may be used instead of, or in addition to, the QoS criteria to select/exclude UEs that are, as non-limiting examples, capable of supporting certain features only, or to select/exclude UEs that support a specific standards release (e.g., a particular 3GPP release or releases). The certain supported features can include, as one non-limiting example, that the UE-EUTRA capabilities can provide information as to whether the UE 10 supports a "standaloneGNSS-Location" feature. It may be preferable for some applications to consider only UEs 10 that are capable of providing GNSS-Location information for the MRO or MLB functionality, respectively.

The overall effect is to introduce different cell borders between the neighbour cells 18, 18' for different set(s) of UEs 10. For example this allows enforcing a different cell border for a selected set of UEs 10 by operation of the Mobility Load Balancing (MLB) functionality while keeping the cell border intact for other UEs. However, the other UEs 10 may still be under control of the Mobility Robustness Optimization (MRO) functionality and, if necessary, can be assigned a new cell border on behalf of the MRO functionality. As a result the MRO functionality and the MLB functionality are enabled to operate simultaneously on different set(s) of UEs 10 and thus take full advantage of their optimization potential for the assigned set of UEs, without any dependencies or constraints that might need to be enforced without the use of the group indicator information.

The group indicator information may be a token that unambiguously identifies groups of UEs 10. The requesting radio node (eNB 12) may decide upon which group indicator information needs to be sent based on predefined operator policies or autonomously based on, for example, local analysis and identification of certain scenarios. For example the eNB 12 may conclude that it has the most advantage in involving just non real time (NRT) UEs 10 in MLB activities in order to reduce its current cell load. In this case it negotiates a new cell border only for the NRT UEs 10 (e.g., only for those UEs 10 that are downloading content (e.g., web pages) from the Internet). The group indication information on behalf of the MLB functionality in this case could be, for example, 'NRT-UEs'. The MRO functionality responsible for eNB 12 can still optimize the border (i.e., the cell-pair specific HO parameters) towards cell 18 for the real time UEs 10. The group indication information on behalf of the MRO functionality could be 'RT-UEs', if it is necessary to shift the cell border during optimization. In this example the group indication information is QoS related.

Therefore, by transferring this kind of group indication information with the enhanced Mobility Change Request message 20 shown in Figure 2 the negotiation of the handover trigger becomes QoS aware. The group indication may also identify smaller sets of UEs 10, e.g., when the Quality of Service Class Identifier (QCI) is chosen as group indication information, or it may consider any other service or policy related criteria that are appropriate to unambiguously identify sets of UEs 10.

Note that a 'group' or a 'set' of UEs 10 may have one member or more than one member.

In one exemplary embodiment of this invention at least one new information element (IE) is added to the Mobility Change Request (MCR) message shown in Figure 1C, e.g., MobilityChangeGrouplndication ::= ENUMERATED { RT, NRT, ... } to form the enhanced Mobility Change Request (MCR) message 20. The exact format and information content can vary from this example.

If the neighbour radio node (eNB 12') acknowledges the request then the HO trigger change will be applied only for the indicated group of UEs 10 and only for the functionality indicated in the cause value of the Mobility Change Request (MCR) message 20. For example, the group "RT" would identify those UEs 10 with at least one RT bearer, while "NRT" would identify those UEs 10 having only established NRT bearers.

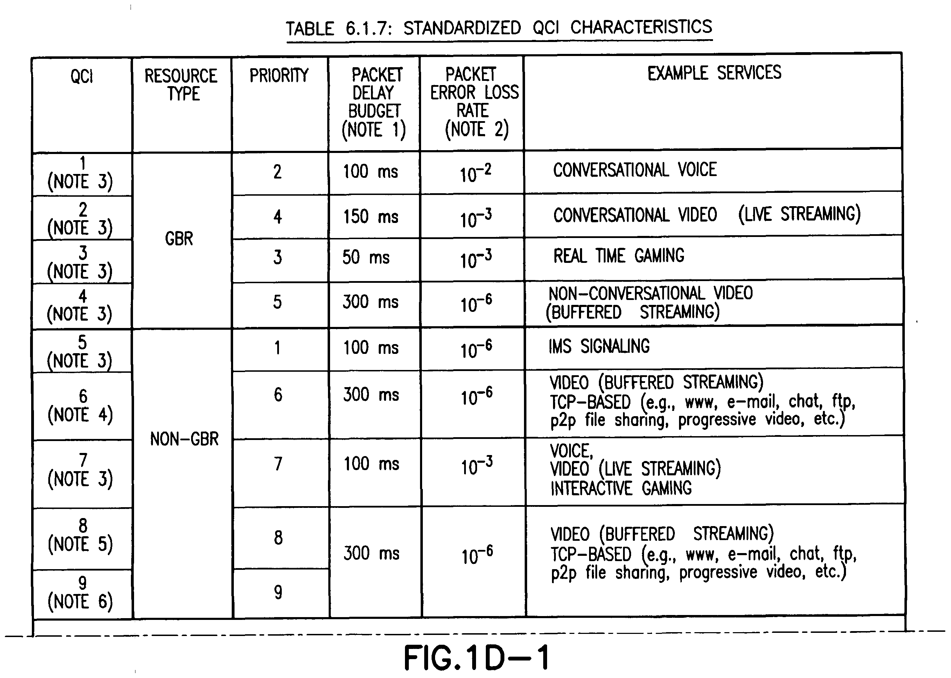

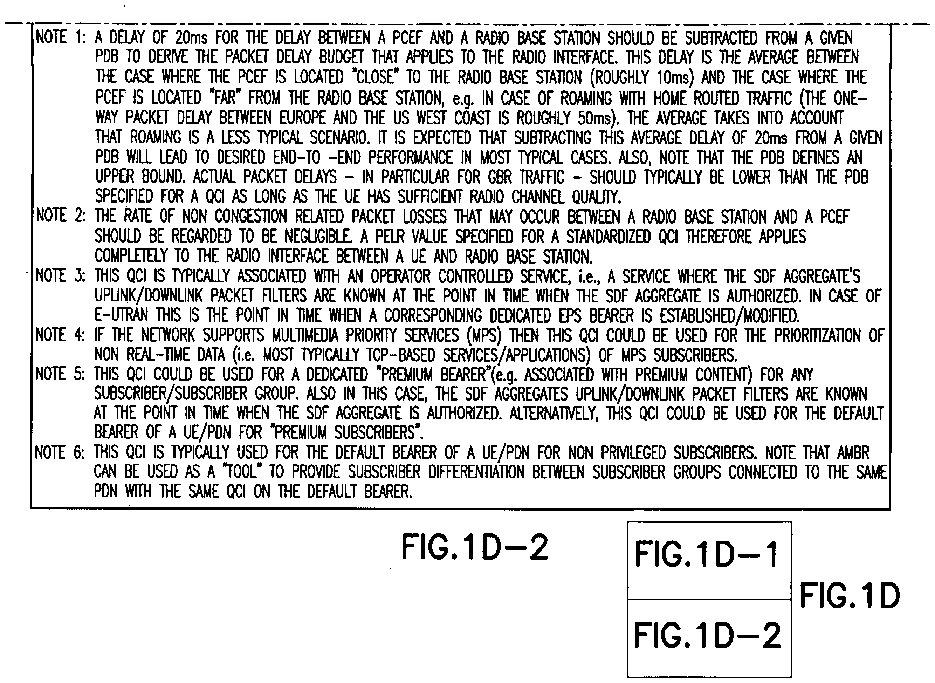

Other embodiments can identify other set(s) of UEs 10 according to, for example, the assigned Quality of Service Class Identifier (QCI) of the bearers. The QCI is a scalar denoting a set of transport characteristics (bearer with/without guaranteed bit rate, priority, packet delay budget, packet error loss rate) and is used to infer node-specific parameters that control packet forwarding treatment. Reference with regard to QCI can be made, for example, to 3GPP TS 23.401 V10.5.0 (2011-09) *Technical Specification* 3rd Generation Partnership Project; Technical Specification Group Services and System Aspects; General Packet Radio Service (GPRS) enhancements for Evolved Universal Terrestrial Radio Access Network (E-UTRAN) access (Release 10), as well as to 3GPP TS 23.203 V11.3.0 (2011-09) *Technical Specification* 3rd Generation Partnership Project; Technical Specification Group Services and System Aspects; Policy and charging control architecture (Release 11). Figure 1D herein reproduces Table 6.1.7 of 3GPP TS 23.203 and shows Standardized QCI characteristics.

The use of the QCI may require a more complex specification of the group indicator information in order specify how to apply the group criterion on the set of bearers that may be established at a UE 10, e.g., a QCI or a set of QCIs and information about the meaning of the grouping, e.g., 'at least one of, 'only these', etc.. A group indication information identifying, for example, QCI2 and QCI4 and providing a meaning of 'only these' would mean that this MCR is for UEs that have established only bearers belonging to any of these QCI classes (e.g., as seen in Figure 1D, example services for QCI class 2 include 'Conversational Video (Live Streaming)', while example services for QCI class 4 include 'Non-Conversational Video (Buffered Streaming)'.

In one case the grouping may collapse to identify individual UEs 10 rather than sets of UEs. The group indication information in this case can for example be the C-RNTI used at the source cell. In this case it may be preferable to perform the cell border negotiation together with the handover procedure in order to reduce the signaling load. For example, it would be possible to add source-Mobility-Parameters, source-Proposed-Mobility-Parameters and a Mobility-Change-Cause IE to the Handover Request message (the source-C-RNTI is in any case transferred by this message). The target-Mobility-Parameters-Modification-Range could be added to the Handover Request Acknowledge and/or Handover Preparation Failure message.

With regard to the foregoing reference can be made, for intra E-UTRAN HOs using X2, to the above-referenced 3GPP TS 36.423. For intra E-UTRAN HOs via EPC using S1, reference can be made to 3GPP TS 36.413 V10.3.0 (2011-09) *Technical Specification* 3^{rd} Generation Partnership Project; Technical Specification Group Radio Access Network; Evolved Universal Terrestrial Radio Access Network (E-UTRAN); S1 Application Protocol (S1AP) (Release 10). The message names are then s-eNB→MME Handover Required and MME→t-eNB Handover Request. The acknowledge in this case is done using t-eNB→MME Handover Request Acknowledge and MME→s-eNB Handover Command.

If the EPC has to change MMEs then additional EPC specifications define corresponding messages to forward the messages on the S10 interface using Forward Relocation Request/Response.

For inter-RAT HOs on the E-UTRAN side the same messages are used as for Intra E-UTRAN using S1 (see 3GPP TS 36.413).

The forwarding of messages on EPC also uses Forward Relocation Request/Response, but as communication is between the MME 14 and the SGSN 26 its now takes place over the S3 interface.

The inter-RAT HO messages on the UTRAN side are defined in 3GPP TS 25.413 V10.3.0 (2011-09) *Technical Specification* 3rd Generation Partnership Project; Technical Specification Group Radio Access Network; UTRAN lu interface Radio Access Network Application Part (RANAP) signalling (Release 10). This is for the lu interface between the SGSN 26 and the RNC 28, and there the messages are named Relocation Request and Relocation Request Acknowledge, if the RNC is the target, or Relocation Required and Relocation Command if the RNC is the source node.

3GPP TS 36.300, in Figures 19.2.2.5.6-1 to 19.2.2.5.6-7 (reproduced herein as Figures 1E-1K), show the flows with message names and which Specifications are the defining ones for various HO scenarios. In that this is a RAN specification the CN flows (the above mentioned Forward Relocations) collapse into the box 'CN'. Note also that these figures show the messages between the base station and the UE. For the purposes of this invention these are of less importance.

Of more importance is the use of the messages mentioned above, whereby the target side may accept the proposed change and configure the measurements accordingly. This new measurement configuration may be sent to the UE 10, i.e., it may already be part of so called target to source transparent containers which are part of above mentioned HO messages. More specifically, these are the subset of messages which are exchanged in the target to source direction. This information will then be sent to the user equipment on HO execution. Thus when the UE 10 attaches to the target radio node the measurements are already according to the new cell border. Otherwise the target radio node needs to perform the necessary configuration after the UE 10 has arrived there.

Furthermore, a root cause analysis procedure of the MRO functionality needs to be informed as well about the different cell-pair specific mobility parameters being used by different services or UEs. This implies that the MRO is also collecting and working with dedicated KPIs with respect to the group identification (e.g. the service types).

The communication between the eNBs 12, 12' in Figure 2 is related to the Intra-RAT case. However, there can also be present one or more additional radio nodes, such as the base station or the NodeB 22 associated with a different radio access technology (RAT) such as GSM/UMTS. For the Inter-RAT case, i.e., the involved neighbour cells belong to different RATs, the group indication information can be added to newly defined messages, e.g., an Inter-RAT version of the existing Intra-LTE Mobility Change procedure. This new procedure can be based on, for example, RAN information management (RIM). Alternatively the group indication information may be added to existing Inter-RAT HO messages.

The RIM framework and procedures are defined in GERAN Specification 3GPP TS 48.018 V10.3.0 (2011-09) *Technical Specification* 3rd Generation Partnership Project; Technical Specification Group GSM/EDGE Radio Access Network; General Packet Radio Service (GPRS); Base Station System (BSS) -Serving GPRS Support Node (SGSN); BSS GPRS Protocol (BSSGP) (Release 10).

For Inter-RAT SON functionalities a specific SON Transfer RIM application has been defined in 3GPP TS 48.018. However the containers that are transferred using this SON Transfer RIM application are defined in normative Annex B of 3GPP TS 36.413. This annex defines lEs used by the SON Transfer RIM application (currently there exist the following applications types: Cell Load Reporting, Multi-Cell Load Reporting, Event-Triggered Cell Load Reporting, HO Reporting). To accommodate the exemplary embodiments of this invention a new application type can be defined, e.g., Mobility Change, along with the corresponding lEs.

In general the embodiments of this invention also are applicable for use with Inter-RAT communication using S1 and corresponding application layer protocols at other RATs (e.g., lu for UTRAN) and RIM.

It is noted that in order to allow the identification and differentiation of the different group-specific KPI counters in the context of MRO, the currently existing messages of the MRO root cause analysis (RLF Indication and HO report) are preferably extended to include the information of the group identification. For that purpose it is furthermore desirable to access network stored context that may have been stored in the radio node before a MRO relevant UE-related event occurred, e.g., a radio link failure (RLF), a short stay, a ping pong or an unnecessary handover event. However, while in 3GPP Rel-9 the method defined for the RLF root cause analysis of the MRO functionality allows access to UE specific context that has been stored for the purpose of the root cause analysis, this is no longer possible in 3GPP Rel-10. Starting with 3GPP Rel-10 the RLF root cause analysis is based solely on the information being provided by the UE 10. Therefore it is noted that the UE 10 should also store the identity information that was assigned to the UE by the serving radio node (e.g., the serving eNB 12) in the cell were the RLF occurred. This identity information is added by the UE to the so-called 'RLF-Report' which is sent to the radio node upon request, e.g., for E-UTRAN the identity information is the C-RNTI. The messages to request/report this RLF report are the 'UEInformationRequest' and the 'UEInformationResponse' messages, respectively. If the RLF report is not retrieved by E-UTRAN then different message names may be used. The identity information can then be added by the MRO functionality to the RLF Indication and/or HO Report messages and can be used by the MRO functionality in the receiving radio node to access previously stored context for the root cause analysis. From this stored context the MRO functionality is enabled to determine dedicated KPIs with respect to the group identifications that are relevant for the MRO functionality.

It is also noted that it is preferable to allow for some kind of negotiation between the source and the target node similar to what is done with the mobility change procedure. However, when a group collapses to a single user equipment 10 then it may be more appropriate to combine the border negotiation with the HO message of the UE 10, rather than to use the mobility change procedure for just one UE. While in a typical use case scenario each group will typically contain more than one UE 10, it is pointed out that the exemplary embodiments of this invention, as was noted above, can operate with groups containing one UE or more than one UE.

Note further that the target eNB (e.g., eNB 12') when recognizing a MLB-related HO, if it does not agree with the proposed value it can reject the HO Request. Using fields in the HO Preparation Fail message the target eNB has the possibility to return a value range that it would be able or willing to accept. The source radio node (eNB 12 for example) can then select an appropriate value within the indicated range and repeat the HO Request. Of course, this may not be an appropriate method when the HO is due to adverse radio conditions since there may not be time to repeat the HO request.

Based on the foregoing it should be apparent that the exemplary embodiments of this invention provide a method, apparatus and computer program(s) to enhance the handover of UEs for at least mobility robustness optimization (MRO) and mobility load balancing (MLB) purposes.

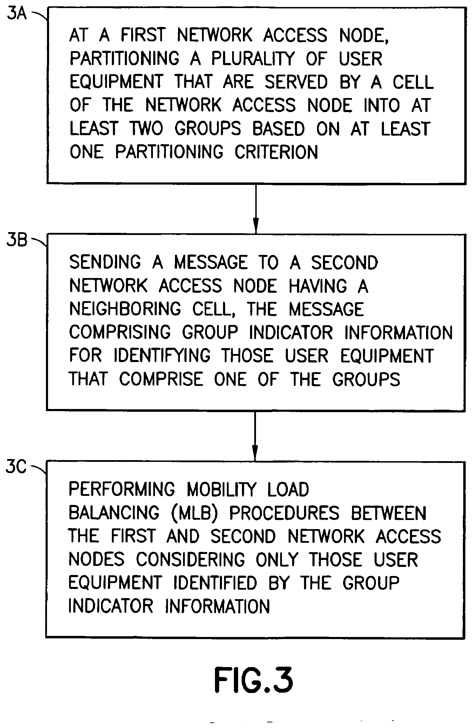

Figure 3 is a logic flow diagram that illustrates the operation of a method, and a result of execution of computer program instructions, in accordance with the exemplary embodiments of this invention. In accordance with these exemplary embodiments a method performs, at Block 3A, a step of, at a first network access node, partitioning a plurality of user equipment that are served by a cell of the network access node into at least two groups based on at least one partitioning criterion. At Block 3B there is a step of sending a message to a second network access node having a neighboring cell, the message comprising group indicator information for identifying those user equipment that comprise one of the groups. At Block 3C there is a step of performing mobility load balancing (MLB) procedures between the first and second network access nodes considering only those user equipment identified by the group indicator information.

The method as shown in Figure 3, where the at least one partitioning criterion is comprised of at least one quality of service (QoS) criterion.

The method as shown in Figure 3, where the at least one partitioning criterion is comprised of at least one user equipment capability criterion.

The method as shown in Figure 3, where the at least one partitioning criterion is comprised of at least one quality of service (QoS) criterion , and where the at least one quality of service criterion is whether a particular user equipment has at least one real time (RT) radio bearer or has only non-real time (NRT) radio bearers.

The method as shown in Figure 3 and as described in the preceding paragraph, where the message is a Mobility Change Request (MCR) message that may have as an information element:
MobilityChangeGrouplndication ::= ENUMERATED { RT, NRT, ...}

The method as shown in Figure 3, where the message is a mobility change request message that comprises information as to whether a particular user equipment has at least one real time radio bearer or has only non-real time radio bearers.

The method as shown in Figure 3, where the at least one partitioning criterion is comprised of at least one quality of service (QoS) criterion, and where the at least one quality of service criterion is based on a Quality of Service Class Identifier (QCI).

The method as shown in Figure 3 and as described in the preceding paragraphs, further comprising performing in terms of mobility robustness optimization (MRO) procedures between the first and second network access nodes separate KPI statistics with respect to the group identifications (including no group identification as a special case of identification).

The method of the preceding paragraph, where the MRO evaluates only the statistics of a subset of groups.

The method of the preceding paragraph, where the MRO evaluates only the statistics of those user equipment not identified by the group indicator information.

The method of the preceding paragraphs where, in order to allow the identification and differentiation of different group-specific KPI counters in the context of MRO, existing messages of the MRO root cause analysis are extended with the information of the group identification.

The method as shown in Figure 3, where there is one user equipment in the group, and where the one user equipment is identified using a cell radio network temporary identifier of the first (source) network access node in a Handover Request message that includes source-Mobility-Parameters, source-Proposed-Mobility-Parameters and a Mobility-Change-Cause information element.

The method as in the preceding paragraph, where a target-Mobility-Parameters-Modification-Range is part of one or both of a Handover Request Acknowledge message and a Handover Preparation Failure message sent by the second network access node to the first network access node.

The method as shown in Figure 3 and as described in the preceding paragraphs, where the handover is an Intra-RAT handover and where the Mobility Change Request (MCR) message is sent over an X2 interface between the first and the second network access nodes.

The method as shown in Figure 3, where the handover is an Intra-RAT handover.

The method as shown in Figure 3, where the handover is an Inter-RAT handover.

The method as shown in Figure 3, where the at least one partitioning criterion is comprised of at least one user equipment capability criterion, and where the at least one user equipment capability criterion is a radio standard release (e.g., 3GPP release) that is supported by the user equipment.

The method as shown in Figure 3, where a user equipment stores identity information that was assigned to the user equipment in a cell were a radio link failure occurred, and where the user equipment adds the stored identity information to a radio link failure related report that is sent upon request.

The method as in the preceding paragraph, where the identity information is used in a receiving radio node to access previously stored context of the user equipment for performing a root cause analysis and determine key performance indicators with respect to group identifications relevant for mobility robustness optimization.

The various blocks shown in Figure 3 may be viewed as method steps, and/or as operations that result from operation of computer program code, and/or as a plurality of coupled logic circuit elements constructed to carry out the associated function(s).

Thus, the embodiments of this invention also pertain to a non-transitory computer-readable medium that contains software program instructions, where execution of the software program instructions by at least one data processor results in performance of operations that comprise execution of the method shown in Figure 3 and described in the preceding paragraphs.

Furthermore, the embodiments of this invention also pertain to an apparatus that comprises at least one data processor and at least one memory including computer program code. The at least one memory and computer program code are configured, with the at least one data processor, to cause the apparatus at least to partition a plurality of user equipment that are served by a cell of a network access node into at least two groups based on at least one partitioning criterion, to send a message to a second network access node having a neighboring cell, the message comprising group indicator information for identifying those user equipment that comprise one of the groups, and to performing mobility load balancing (MLB) procedures between the first and second network access nodes considering only those user equipment identified by the group indicator information.

Also described is an apparatus that comprises means for partitioning a plurality of user equipment that are served by a cell of a network access node into at least two groups based on at least one partitioning criterion; means for sending a message to a second network access node having a neighboring cell, the message comprising group indicator information for identifying those user equipment that comprise one of the groups; and means for performing mobility load balancing (MLB) procedures between the first and second network access nodes considering only those user equipment identified by the group indicator information.

In either of the foregoing two apparatus claims the at least one partitioning criterion can be comprised of at least one quality of service (QoS) criterion and/or at least one user equipment capability criterion.

In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the exemplary embodiments of this invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

It should thus be appreciated that at least some aspects of the exemplary embodiments of the inventions may be practiced in various components such as integrated circuit chips and modules, and that the exemplary embodiments of this invention may be realized in an apparatus that is embodied as an integrated circuit. The integrated circuit, or circuits, may comprise circuitry (as well as possibly firmware) for embodying at least one or more of a data processor or data processors, a digital signal processor or processors, baseband circuitry and radio frequency circuitry that are configurable so as to operate in accordance with the exemplary embodiments of this invention.

Various modifications and adaptations to the foregoing exemplary embodiments of this invention may become apparent to those skilled in the relevant arts in view of the foregoing description, when read in conjunction with the accompanying drawings. However, any and all modifications will still fall within the scope of the non-limiting and exemplary embodiments of this invention.

For example, while the exemplary embodiments have been described above in the context of the UTRAN and UTRAN-LTE systems, it should be appreciated that the exemplary embodiments of this invention are not limited for use with only these particular types of wireless communication systems, and that they may be used to advantage in other wireless communication systems.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several non-limiting and non-exhaustive examples.

Further, the various names used for the described parameters (e.g., RT, NRT, etc.) are not intended to be limiting in any respect, as these parameters may be identified by any suitable names. Further, the various names assigned to different messages (e.g., Mobility Change Request) and message information elements (e.g., MobilityChangeGrouplndication) are not intended to be limiting in any respect, as these various messages and message information elements may be identified by any suitable names. Furthermore, some of the features of the various non-limiting and exemplary embodiments of this invention may be used to advantage without the corresponding use of other features. As such, the foregoing description should be considered as merely illustrative of the principles, teachings and exemplary embodiments of this invention, and not in limitation thereof.

## Claims

1. A method comprising:
at a first network access node (12), partitioning a plurality of user equipment (10) that are served by a cell of the network access node into at least two groups based on at least one partitioning criterion;
sending a message to a second network access node (12') having a neighboring cell, the message comprising group indicator information for identifying those user equipment (10) that are comprised in the at least one first group ;
performing mobility load balancing procedures between the first and second network access nodes (12, 12') considering only those user equipment (10) identified by the group indicator information, and simultaneously performing mobility robustness optimization procedures between the first and second network access nodes (12, 12') with respect to group indicator information, considering only those user equipments (10) that are comprised in the at least one second group.

2. The method as in claim 1, where the at least one partitioning criterion is comprised of at least one quality of service criterion.

3. The method as in claim 1, where the at least one partitioning criterion is comprised of at least one user equipment capability criterion.

4. The method as in claim 2, where the at least one quality of service criterion is whether a particular user equipment (10) has at least one real time radio bearer or has only non-real time radio bearers.

5. The method as in claim 1, where the message is a mobility change request message that comprises information as to whether a particular user equipment (10) has at least one real time radio bearer or has only non-real time radio bearers.

6. The method as in claim 2, where the at least one quality of service criterion is based on a Quality of Service Class Identifier.

7. The method as in claim 1, further comprising performing, in terms of mobility robustness optimization procedures between the first and second network access nodes (12, 12'), separate key performance indicator statistics with respect to group indicator information.

8. The method of claim 7, where the mobility robustness optimization evaluates only the statistics of a subset of groups.

9. The method of claim 8, where the mobility robustness optimization evaluates only the statistics of those user equipment (10) not identified by the group indicator information.

10. The method of claim 7, where absence of a group identification is considered as a special case of group identification.

11. An apparatus (12, 12') comprising:
at least one data processor and at least one memory including computer program code, the at least one memory and computer program code being configured, with the at least one data processor,
to cause the apparatus (12, 12') at least to partition a plurality of user equipment (10) that are served by a cell of a network access node into at least two groups based on at least one partitioning criterion,
to send a message to a second network access node (12') having a neighboring cell, the message comprising group indicator information for identifying those user equipment (10) that are comprised in the at least one first group, and
**characterized in that** the apparatus is further configured to perform mobility load balancing procedures between the first and second network access nodes (12, 12') considering only those user equipment (10) identified by the group indicator information, and to simultaneously perform mobility robustness optimization procedures between the first and second network access nodes (12, 12') with respect to group indicator information, considering only those user equipments (10) that are comprised in the at least one second group.

12. The apparatus as in claim 11, where the at least one partitioning criterion is comprised of at least one quality of service criterion.

13. The apparatus as in claim 11, where the at least one partitioning criterion is comprised of at least one user equipment (10) capability criterion.

14. The apparatus as in claim 12, where the at least one quality of service criterion is whether a particular user equipment (10) has at least one real time radio bearer or has only non-real time radio bearers.

15. The apparatus as in claim 14, where the message is a mobility change request message that comprises information as to whether a particular user equipment (10) has at least one real time radio bearer or has only non-real time radio bearers.

## Patentansprüche

1. Verfahren, umfassend:
an einem ersten Netzwerkzugangsknoten (12) Aufteilen einer Mehrzahl von Benutzereinrichtungen (10), die von einer Zelle des Netzwerkzugangsknotens versorgt werden, in mindestens zwei Gruppen basierend auf mindestens einem Aufteilungskriterium;
Senden einer Nachricht an einen zweiten Netzwerkzugangsknoten (12'), der eine Nachbarzelle aufweist, wobei die Nachricht Gruppenindikatorinformationen zum Identifizieren jener Benutzereinrichtungen (10) umfasst, die in der mindestens einen ersten Gruppe umfasst sind;
Durchführen von Mobilitätslastausgleichsprozeduren zwischen dem ersten und dem zweiten Netzwerkzugangsknoten (12, 12') nur unter Berücksichtigung jener Benutzereinrichtungen (10), die durch die Gruppenindikatorinformationen identifiziert werden, und gleichzeitiges Durchführen von Mobilitätsrobustheitsoptimierungsprozeduren zwischen dem ersten und dem zweiten Netzwerkzugangsknoten (12, 12') in Bezug auf Gruppenindikatorinformationen nur unter Berücksichtigung jener Benutzereinrichtungen (10), die in der mindestens einen zweiten Gruppe umfasst sind.

2. Verfahren nach Anspruch 1, wobei das mindestens eine Aufteilungskriterium mindestens ein Dienstqualitätskriterium umfasst.

3. Verfahren nach Anspruch 1, wobei das mindestens eine Aufteilungskriterium mindestens ein Benutzereinrichtungsfähigkeitskriterium umfasst.

4. Verfahren nach Anspruch 2, wobei das mindestens eine Dienstqualitätskriterium ist, ob eine spezifische Benutzereinrichtung (10) mindestens einen Echtzeit-Funkträger aufweist oder nur Nicht-Echtzeit-Funkträger aufweist.

5. Verfahren nach Anspruch 1, wobei die Nachricht eine Mobilitätsänderungsanforderungsnachricht ist, die Informationen im Hinblick darauf umfasst, ob eine spezifische Benutzereinrichtung (10) mindestens einen Echtzeit-Funkträger aufweist oder nur Nicht-Echtzeit-Funkträger aufweist.

6. Verfahren nach Anspruch 2, wobei das mindestens eine Dienstqualitätskriterium auf einer Dienstqualitätsklassenkennung basiert.

7. Verfahren nach Anspruch 1, ferner umfassend hinsichtlich Mobilitätsrobustheitsoptimierungsprozeduren zwischen dem ersten und dem zweiten Netzwerkzugangsknoten (12, 12') ein Durchführen von getrennten Leistungskennzahlstatistiken in Bezug auf Gruppenindikatorinformationen.

8. Verfahren nach Anspruch 7, wobei die Mobilitätsrobustheitsoptimierung nur die Statistiken eines Teilsatzes von Gruppen auswertet.

9. Verfahren nach Anspruch 8, wobei die Mobilitätsrobustheitsoptimierung nur die Statistiken jener Benutzereinrichtungen (10) auswertet, die nicht durch die Gruppenindikatorinformationen identifiziert werden.

10. Verfahren nach Anspruch 7, wobei das Fehlen einer Gruppenidentifikation als ein Sonderfall von Gruppenidentifikation betrachtet wird.

11. Vorrichtung (12, 12'), umfassend:
mindestens einen Datenprozessor und mindestens einen Speicher, der Computerprogrammcode umfasst, wobei der mindestens eine Speicher und der Computerprogrammcode so konfiguriert sind, dass sie mit dem mindestens einen Datenprozessor die Vorrichtung (12, 12') wenigstens veranlassen zum:
Aufteilen einer Mehrzahl von Benutzereinrichtungen (10), die von einer Zelle eines Netzwerkzugangsknotens versorgt werden, in mindestens zwei Gruppen basierend auf mindestens einem Aufteilungskriterium,
Senden einer Nachricht an einen zweiten Netzwerkzugangsknoten (12'), der eine Nachbarzelle aufweist, wobei die Nachricht Gruppenindikatorinformationen zum Identifizieren jener Benutzereinrichtungen (10) umfasst, die in der mindestens einen ersten Gruppe umfasst sind; und
**dadurch gekennzeichnet, dass** die Vorrichtung ferner so konfiguriert ist, dass sie Mobilitätslastausgleichprozeduren zwischen dem ersten und dem zweiten Netzwerkzugangsknoten (12, 12') nur unter Berücksichtigung jener Benutzereinrichtungen (10) durchführt, die durch die Gruppenindikatorinformationen identifiziert werden,
und gleichzeitig Mobilitätsrobustheitsoptimierungsprozeduren zwischen dem ersten und dem zweiten Netzwerkzugangsknoten (12, 12') in Bezug auf Gruppenindikatorinformationen nur unter Berücksichtigung jener Benutzereinrichtungen (10) durchführt, die in der mindestens einen zweiten Gruppe umfasst sind.

12. Vorrichtung nach Anspruch 11, wobei das mindestens eine Aufteilungskriterium mindestens ein Dienstqualitätskriterium umfasst.

13. Vorrichtung nach Anspruch 11, wobei das mindestens eine Aufteilungskriterium mindestens ein Fähigkeitskriterium einer Benutzereinrichtung (10) umfasst.

14. Vorrichtung nach Anspruch 12, wobei das mindestens eine Dienstqualitätskriterium ist, ob eine spezifische Benutzereinrichtung (10) mindestens einen Echtzeit-Funkträger aufweist oder nur Nicht-Echtzeit-Funkträger aufweist.

15. Vorrichtung nach Anspruch 14, wobei die Nachricht eine Mobilitätsänderungsanforderungsnachricht ist, die Informationen im Hinblick darauf umfasst, ob eine spezifische Benutzereinrichtung (10) mindestens einen Echtzeit-Funkträger aufweist oder nur Nicht-Echtzeit-Funkträger aufweist.

## Revendications

1. Procédé comprenant :
au niveau d'un premier nœud d'accès réseau (12), le partitionnement d'une pluralité d'équipements utilisateurs (10) qui sont desservis par une cellule du nœud d'accès réseau en au moins deux groupes sur la base au moins d'un critère de partitionnement ;
l'envoi d'un message à un second nœud d'accès réseau (12') présentant une cellule voisine, le message comprenant des informations d'indicateurs de groupes pour identifier les équipements utilisateurs (10) qui sont compris dans l'au moins un premier groupe ;
la réalisation de procédures d'équilibrage de charge de mobilité entre les premier et second nœuds d'accès réseau (12, 12') en considérant uniquement les équipements utilisateurs (10) identifiés par les informations d'indicateurs de groupes, et la réalisation simultanée de procédures d'optimisation de robustesse de mobilité entre les premier et second nœuds d'accès réseau (12, 12') relativement à des informations d'indicateurs de groupes, en considérant uniquement les équipements utilisateurs (10) qui sont compris dans l'au moins un deuxième groupe.

2. Procédé selon la revendication 1, dans lequel l'au moins un critère de partitionnement est composé d'au moins un critère de qualité de service.

3. Procédé selon la revendication 1, dans lequel l'au moins un critère de partitionnement est composé d'au moins un critère de capabilité d'équipement utilisateur.

4. Procédé selon la revendication 2, dans lequel l'au moins un critère de qualité de service est qu'un équipement utilisateur particulier (10) possède au moins un support radio en temps réel ou uniquement des supports radio non en temps réel.

5. Procédé selon la revendication 1, dans lequel le message est un message de requête de changement de mobilité qui comprend des informations indiquant qu'un équipement utilisateur particulier (10) possède au moins un support radio en temps réel ou possède uniquement des supports radio non en temps réel.

6. Procédé selon la revendication 2, dans lequel l'au moins un critère de qualité de service est basé sur un identifiant de classe de qualité de service.

7. Procédé selon la revendication 1, comprenant en outre la réalisation, en termes de procédures d'optimisation de robustesse de mobilité entre les premier et second nœuds d'accès réseau (12, 12'), de statistiques d'indicateurs de performance clés séparées relativement aux informations d'indicateurs de groupes.

8. Procédé selon la revendication 7, dans lequel l'optimisation de robustesse de mobilité évalue uniquement les statistiques d'un sous-ensemble de groupes.

9. Procédé selon la revendication 8, dans lequel l'optimisation de robustesse de mobilité évalue uniquement les statistiques des équipements utilisateurs (10) non identifiés par les informations d'indicateurs de groupes.

10. Procédé selon la revendication 7, dans lequel l'absence d'une identification de groupe est considérée en tant que cas spécial d'identification de groupe.

11. Appareil (12, 12") comprenant :
au moins un processeur de données et au moins une mémoire comportant un code de programme informatique, l'au moins une mémoire et le code de programme informatique étant configurés, avec l'au moins un processeur, pour
amener l'appareil (12, 12') à au moins partitionner une pluralité d'équipements utilisateurs (10) qui sont desservis par une cellule d'un nœud d'accès réseau en au moins deux groupes sur la base au moins d'un critère de partitionnement,
envoyer un message à un second nœud d'accès réseau (12') présentant une cellule voisine, le message comprenant des informations d'indicateurs de groupes pour identifier les équipements utilisateurs (10) qui sont compris dans l'au moins un premier groupe, et
**caractérisé en ce que** l'appareil est configuré en outre pour réaliser des procédures d'équilibrage de charge de mobilité entre les premier et second nœuds d'accès réseau (12, 12') en considérant uniquement les équipements utilisateurs (10) identifiés par les informations d'indicateurs de groupes, et réaliser simultanément des procédures d'optimisation de robustesse de mobilité entre les premier et second nœuds d'accès réseau (12, 12') relativement à des informations d'indicateurs de groupes, en considérant uniquement les équipements utilisateurs (10) qui sont compris dans l'au moins un deuxième groupe.

12. Appareil selon la revendication 11, dans lequel l'au moins un critère de partitionnement est composé d'au moins un critère de qualité de service.

13. Appareil selon la revendication 11, dans lequel l'au moins un critère de partitionnement est composé d'au moins un critère de capabilité d'équipement utilisateur (10) .

14. Appareil selon la revendication 12, dans lequel l'au moins un critère de qualité de service est qu'un équipement utilisateur particulier (10) possède au moins un support radio en temps réel ou uniquement des supports radio non en temps réel.

15. Appareil selon la revendication 14, dans lequel le message est un message de requête de changement de mobilité qui comprend des informations indiquant qu'un équipement utilisateur particulier (10) possède au moins un support radio en temps réel ou possède uniquement des supports radio non en temps réel.
